# EUROPEAN PATENT APPLICATION

(11) **EP 4 525 094 A1**
(43) Date of publication of application: **19.03.2025**
(21) Application number: 23819482.3
(22) Date of filing: 06.04.2023
(51) Int. Cl.: H01M 4/62, C09D 17/00, H01M 4/139

(54) **SLURRY, METHOD FOR PRODUCING ELECTRODES, AND METHOD FOR PRODUCING BATTERIES**

(30) Priority: 08.06.2022 JP 2022093055
(71) Applicant: Denka Company Limited, Tokyo 103-8338 (JP)
(72) Inventor: MATSUI, Mizuki, Tokyo 103-8338 (JP); NAGAI, Tatsuya, Tokyo 103-8338 (JP); ITO, Tetsuya, Tokyo 103-8338 (JP)
(74) Representative: Hoffmann Eitle
(86) International application number: PCT/JP2023/014246
(87) International publication number: WO 2023/238495

(57) **Abstract**

In a slurry containing carbon black in a liquid medium, an average primary particle size of the carbon black is 17 nm or more and 30 nm or less, a crystallite size (Lc) of the carbon black is 15Å or more and 26Å or less, and in a volume-based particle size distribution of a particle group including secondary particles of the carbon black and tertiary particles obtained by aggregation of the secondary particles of the carbon black in the slurry measured by a laser diffraction/scattering method, D50 (µm) is 0.5 µm or more and 0.9 µm or less, and a ratio of D50 (µm) to a difference between D10 (µm) and D90 (µm) (D50/(D90 - D10)) is 0.25 or more and 0.5 or less.

## Description

### Technical Field

The present invention relates to a slurry, a method for producing electrodes, and a method for producing batteries.

### Background Art

Due to the increase in environmental and energy problems, technology for realizing a low-carbon society that reduces the degree of dependence on fossil fuels has been actively developed. Such technical development includes the development of low-pollution vehicles such as hybrid electric vehicles and electric vehicles, the development of natural energy power generation and storage systems such as solar power generation and wind power generation, the development of a nextgeneration power transmission grid that efficiently supplies power and reduces power transmission loss, and the like.

One of the key devices required in common for these techniques is a battery, and such a battery is required to have a high energy density for reducing the size of the system. In addition, high discharge rate characteristics for enabling stable power supply regardless of the use environment temperature are required. Furthermore, good cycle characteristics and the like that can withstand long-term use are also required. Therefore, replacement of conventional lead-acid batteries, nickel-cadmium batteries, and nickel-hydrogen batteries with lithium ion secondary batteries having higher energy density, discharge rate characteristics, and cycle characteristics is rapidly progressing.

Conventionally, a positive electrode of a lithium ion secondary battery is manufactured by applying a positive electrode paste containing a positive electrode active material, a conductive material, and a binding material (also referred to as a binder) to a current collector. As the positive electrode active material, lithium-containing composite oxides such as lithium cobaltate and lithium manganate have been used. In addition, since a positive electrode active material is poor in conductivity, a conductive material such as carbon black has been added to a positive electrode paste for the purpose of imparting conductivity (for example, Patent Literature 1).

### Citation List

### Patent Literature

Patent Literature 1: Japanese Unexamined Patent Publication No. 2008-227481

### Summary of Invention

### Technical Problem

In recent years, further improvement in performance in batteries such as lithium ion secondary batteries has been required.

An object of the present invention is to provide an electrode containing carbon black, having excellent discharge rate characteristics and cycle characteristics, and having excellent peeling strength between a mixture layer and a current collector, and a slurry useful for forming a battery. It is also an object of the present invention to provide a method for producing electrodes and a method for producing batteries using the slurry.

### Solution to Problem

The present invention relates to, for example, the following <1> to <4>.
<1> A slurry containing carbon black in a liquid medium, in which
   an average primary particle size of the carbon black is 17 nm or more and 30 nm or less,
   a crystallite size (Lc) of the carbon black is 15Å or more and 26Å or less, and
   in a volume-based particle size distribution of a particle group including secondary particles of the carbon black and tertiary particles obtained by aggregation of the secondary particles of the carbon black in the slurry measured by a laser diffraction/scattering method, D50 (µm) is 0.5 µm or more and 0.9 µm or less, and a ratio of D50 (µm) to a difference between D10 (µm) and D90 (µm) (D50/(D90 - D10)) is 0.25 or more and 0.5 or less.
<2> A coating liquid for electrode formation, which is a mixture of the slurry according to <1>, a binding material solution containing a binding material in a liquid medium, and an active material.
<3> A method for producing electrodes including a current collector and a mixture layer, the method including:
   mixing the slurry according to <1>, a binding material solution containing a binding material in a liquid medium, and an active material to obtain the coating liquid for electrode formation according to <2>;
   applying the coating liquid for electrode formation onto a current collector; and
   removing at least a part of the liquid medium to form a mixture layer on the current collector, and forming an electrode including the current collector and the mixture layer.
<4> A method for producing batteries, including: the method for producing electrodes according to <3>.

In the present specification, a tilde symbol "~" may be used to indicate a numerical range including numerical values described before and after the tilde symbol. Specifically, the description (Both X and Y are numerical values) of "X to Y" indicates "X or more and Y or less".

### Advantageous Effects of Invention

According to the present invention, provided is an electrode containing carbon black, having excellent discharge rate characteristics of a battery and cycle characteristics, and having excellent peeling strength between a mixture layer and a current collector, and a slurry useful for forming a battery. Further, according to the present invention, a method for producing electrodes and a method for producing batteries using the slurry are provided.

### Description of Embodiments

Hereinafter, preferred embodiments of the present invention will be described in detail.

### <Slurry>

The slurry of the present embodiment contains carbon black in a liquid medium. In the present embodiment, the average primary particle size of the carbon black is 17 nm or more and 30 nm or less, and the crystallite size (Lc) of the carbon black is 15Å or more and 26Å or less. In the slurry of the present embodiment, in a volume-based particle size distribution measured by a laser diffraction/scattering method, D50 (µm) is 0.5 µm or more and 0.9 µm or less, and a ratio of D50 (µm) to a difference between D10 (µm) and D90 (µm) (D50/(D90 - D10)) is 0.25 or more and 0.5 or less.

The slurry of the present embodiment is useful for forming an electrode for a battery such as a lithium ion secondary battery, and a battery having excellent discharge rate characteristics and cycle characteristics of the battery can be formed by using an electrode formed using the slurry of the present embodiment. In addition, it is possible to provide an electrode and a battery having excellent peeling strength between a mixture layer and a current collector.

According to findings by the present inventors, it is considered that carbon black having an average primary particle size and a crystallite size within the above ranges is finely dispersed in a liquid medium so that D50 and the ratio (D50/(D90 - D10)) are within the above ranges, whereby the carbon black in the slurry is in a dispersed state effective for electrode formation, and a battery excellent in discharge rate characteristics is realized.

More specifically, it is considered that a structure of carbon black affects conductivity in electrode formation, and when the structure is developed, a conductive path in the electrode can be efficiently formed. On the other hand, since the structure of carbon black having a small primary particle size develops in a complicatedly entangled shape, the viscosity of the slurry increases, and uniform dispersion in a liquid medium tends to be difficult. In the slurry of the present embodiment, carbon black is finely dispersed in a liquid medium in a dispersed state effective for electrode formation while maintaining a structure capable of forming an efficient conductive path in an electrode. Therefore, it is considered that a battery having excellent discharge rate characteristics is realized by the slurry of the present embodiment.

### <Carbon Black>

In the present embodiment, the carbon black may be acetylene black, furnace black, channel black, or the like, and is preferably acetylene black from the viewpoint of excellent purity and easiness of obtaining excellent battery characteristics.

The carbon black may have an average primary particle size of 17 nm or more, 18 nm or more, or 19 nm or more. Since the average primary particle size of carbon black is large, the interaction between the liquid medium and the conductive material and the interaction between the conductive materials are reduced, so that the carbon black is easily mixed with the active material uniformly, and a strong conductive path is easily formed, so that excellent battery characteristics are easily obtained.

The average primary particle size of carbon black is 30 nm or less, and may be 29 nm or less, 27 nm or less, 25 nm or less, 23 nm or less, or 21 nm or less. It is considered that when the average primary particle size of carbon black is small, the number of electrical contacts with the active material and the conductive material is increased, and conductivity is improved, so that excellent battery characteristics are easily obtained. That is, the average primary particle size of carbon black may be, for example, 17 to 30 nm, 17 to 29 nm, 17 to 27 nm, 17 to 25 nm, 17 to 23 nm, 17 to 21 nm, 18 to 30 nm, 18 to 29 nm, 18 to 27 nm, 18 to 25 nm, 18 to 23 nm, 18 to 21 nm, 19 to 30 nm, 19 to 29 nm, 19 to 27 nm, 19 to 25 nm, 19 to 23 nm, or 19 to 21 nm.

The average primary particle size of carbon black means an average value of equivalent circle diameters measured on the basis of an image obtained by observing carbon black with a transmission electron microscope (TEM). Specifically, the average primary particle size of carbon black is obtained by imaging 10 sheets of carbon black at a magnification of 100,000 times using a transmission electron microscope JEM-2000FX (manufactured by JEOL Ltd.), measuring equivalent circle diameters of 200 primary particles of carbon black randomly extracted from the obtained image by image analysis, and arithmetically averaging the measured values.

The crystallite size (Lc) of carbon black is 15Å or more, and may be 16Å or more. It is considered that when the crystallite size (Lc) of carbon black is large, π electrons easily move in the crystal layer, and a conductive path for carrying electrons having flown from the current collector to the active material is more easily formed, so that excellent battery characteristics are easily obtained.

The crystallite size (Lc) of carbon black is 26Å or less, and may be 25Å or less, 23Å or less, 21Å or less, 19Å or less, or 17Å or less. It is considered that since the crystallite size (Lc) of carbon black is small, the particle shape of the primary particles of carbon black is more likely to be rounded, so that interparticle interaction is reduced, mixing with the active material is easy to be uniform, and a conductive path is more likely to be formed, so that excellent battery characteristics are easily obtained.

That is, the crystallite size (Lc) of carbon black may be, for example, 15 to 26Å, 15 to 25Å, 15 to 23Å, 15 to 21Å, 15 to 19Å, 15 to 17Å, 16 to 26Å, 16 to 25Å, 16 to 23Å, 16 to 21Å, 16 to 19Å, or 16 to 17Å.

The crystallite size (Lc) of carbon black is measured in accordance with JIS R7651. The crystallite size (Lc) of carbon black means the crystallite size in the c-axis direction of the carbon black crystal layer.

The BET specific surface area of carbon black may be, for example, 100 m²/g or more, 120 m²/g or more, 140 m²/g or more, or 160 m²/g or more. When the BET specific surface area of carbon black is large, the number of electrical contacts with the active material and the conductive material increases, and conductivity is improved, so that more excellent battery characteristics tend to be easily obtained.

The BET specific surface area of carbon black may be, for example, 500 m²/g or less, 450 m²/g or less, 400 m²/g or less, 350 m²/g or less, or 300 m²/g or less. When the BET specific surface area of carbon black is small, the interaction between the liquid medium and the conductive material and the interaction between the conductive materials are reduced, so that the carbon black is easily mixed with the active material uniformly, and a strong conductive path is easily formed, so that more excellent battery characteristics tend to be easily obtained.

That is, the BET specific surface area of carbon black may be, for example, 100 to 500 m²/g, 100 to 450 m²/g, 100 to 400 m²/g, 100 to 350 m²/g, 100 to 300 m²/g, 120 to 500 m²/g, 120 to 450 m²/g, 120 to 400 m²/g, 120 to 350 m²/g, 120 to 300 m²/g, 140 to 500 m²/g, 140 to 450 m²/g, 140 to 400 m²/g, 140 to 350 m²/g, 140 to 300 m²/g, 160 to 500 m²/g, 160 to 450 m²/g, 160 to 400 m²/g, 160 to 350 m²/g, or 160 to 300 m²/g.

The BET specific surface area of carbon black can be measured by a static capacity method in accordance with JIS Z8830 using nitrogen as an adsorbent.

When a peak area of the peak having the mass number of m/z of 57 detected by a temperature-programmed desorption gas analysis method of carbon black is denoted by S₁ and a peak area of the peak having the mass number of m/z of 128 is denoted by S₂, a ratio (S₂/S₁) of the peak area S₂ to the peak area S₁ is preferably 0.2 to 1.9. The ratio (S₂/S₁) indicates the ratio of organic components adsorbed on the surface of carbon black. When the ratio (S₂/S₁) is 1.9 or less, the amount of organic components adsorbed on the surface of carbon black is sufficiently reduced, and a decrease in conductivity due to trapping of π electrons by the organic components is remarkably suppressed. When the ratio (S₂/S₁) is 0.2 or more, the organic component adsorbed on the surface of carbon black plays a role of a dispersant, and dispersibility in a liquid medium is improved, so that the slurry viscosity is further reduced. The peak area S₁ of the peak having the mass number m/z of 57 and the peak area S₂ of the peak having the mass number m/z of 128 can be measured by evolved gas mass spectrometry (EGA-MS). For example, carbon black is set in a gas chromatograph mass spectrometer having a pyrolysis apparatus, and held at 50°C for 5 minutes in an atmospheric pressure He flow, then the temperature is raised to 800°C at 80°C/min, and mass spectrometry of components desorbed by the temperature rise is performed, whereby the peak area S₁ of the peak having the mass number of m/z of 57 and the peak area S₂ of the peak having the mass number of m/z of 128 can be measured.

The ratio (S₂/S₁) may be 1.5 or less, 1.0 or less, 0.8 or less, 0.6 or less, 0.5 or less, 0.4 or less, or 0.3 or less from the viewpoint of more excellent discharge rate characteristics. The ratio (S₂/S₁) may be 0.25 or more or 0.3 or more.

That is, the ratio (S₂/S₁) may be, for example, 0.2 to 1.9, 0.2 to 1.5, 0.2 to 1.0, 0.2 to 0.8, 0.2 to 0.6, 0.2 to 0.5, 0.2 to 0.4, 0.2 to 0.3, 0.25 to 1.9, 0.25 to 1.5, 0.25 to 1.0, 0.25 to 0.8, 0.25 to 0.6, 0.25 to 0.5, 0.25 to 0.4, 0.25 to 0.3, 0.3 to 1.9, 0.3 to 1.5, 0.3 to 1.0, 0.3 to 0.8, 0.3 to 0.6, 0.3 to 0.5, or 0.3 to 0.4.

The volume resistivity of carbon black may be 0.30 Ω·cm or less or 0.25 Ω·cm or less from the viewpoint of excellent conductivity. The volume resistivity of carbon black is measured, for example, in a state of being compressed under a load of 7.5 MPa.

The ash content and the moisture content of the carbon black are not particularly limited. The ash content of the carbon black may be, for example, 0.04 mass% or less, and the moisture content of the carbon black may be, for example, 0.10 mass% or less.

The method for producing carbon black is not particularly limited. The carbon black may be produced, for example, by a producing method including a synthesis step of treating a hydrocarbon-containing raw material gas in a cylindrical decomposition furnace to obtain carbon black, and a purification step of removing magnetic foreign matters from the carbon black obtained in the synthesis step with a magnet.

In the synthesis step, the raw material gas is treated in a cylindrical decomposition furnace. The cylindrical decomposition furnace may include, for example, a thermal decomposition unit that performs a thermal decomposition reaction of a hydrocarbon and an aging unit that reforms a thermal decomposition reaction product. The cylindrical decomposition furnace may further include a supply port for supplying the raw material gas to the thermal decomposition unit and a recovery port for recovering carbon black generated from the aging unit.

In the thermal decomposition unit, the supplied raw material gas preferably stays at a temperature of 1900°C or higher for 30 to 150 seconds. When the residence time of the raw material gas is 30 seconds or more, the thermal decomposition reaction can be completed and the carbon aerosol can be more reliably formed by the development of the chain structure. In addition, since the residence time of the raw material gas is 150 seconds or less, the aggregation of the carbon aerosol is suppressed, so that the magnetic foreign matters are more easily removed in the purification step, and high purity carbon black is easily obtained.

In the aging unit, the thermal decomposition reaction product supplied from the thermal decomposition unit preferably stays at a temperature of 1700°C or higher for 20 to 90 seconds. When the residence time of the thermal decomposition reaction product is 20 seconds or more, higher quality carbon black is easily obtained by reforming the carbon aerosol and promoting the development of aggregates. In addition, since the residence time of the thermal decomposition reaction product is 90 seconds or less, the aggregation of the carbon aerosol is suppressed, so that the magnetic foreign matters are more easily removed in the purification step, and high purity carbon black is easily obtained.

The residence time in each of the thermal decomposition unit and the aging unit can be appropriately adjusted by adjusting the gas linear velocity of the flowing gas. The residence time in the aging unit is preferably shorter than the residence time in the thermal decomposition unit. That is, the gas linear velocity in the aging unit is preferably higher than the gas linear velocity in the thermal decomposition unit.

In the present embodiment, the raw material gas preferably contains acetylene as a carbon source. The content of the carbon source (for example, acetylene) in the raw material gas is, for example, 10 vol% or more, preferably 20 vol% or more, more preferably 30 vol% or more, and may be 100 vol%. The content of each component in the raw material gas indicates a volume ratio based on a volume at 100°C and 1 atm.

The raw material gas may further contain another hydrocarbon other than the carbon source (for example, acetylene). Examples of other hydrocarbons include methane, ethane, propane, ethylene, propylene, butadiene, benzene, toluene, xylene, gasoline, kerosene, light oil, and heavy oil. The addition of these other hydrocarbons can change the reaction temperature to increase or decrease the specific surface area of the carbon black. The other hydrocarbon is preferably selected from the group consisting of aromatic hydrocarbons such as benzene and toluene, and unsaturated hydrocarbons such as ethylene and propylene.

In a case where the raw material gas contains acetylene and other hydrocarbon, the content of the other hydrocarbon is, for example, 0.1 to 99 parts by volume, preferably 0.2 to 50 parts by volume, and more preferably 0.3 to 30 parts by volume with respect to 100 parts by volume of acetylene.

That is, the content of the other hydrocarbon may be, for example, 0.1 to 99 parts by volume, 0.1 to 50 parts by volume, 0.1 to 30 parts by volume, 0.2 to 99 parts by volume, 0.2 to 50 parts by volume, 0.2 to 30 parts by volume, 0.3 to 99 parts by volume, 0.3 to 50 parts by volume, or 0.3 to 30 parts by volume with respect to 100 parts by volume of acetylene.

The raw material gas may further contain water vapor gas, oxygen gas, hydrogen gas, carbon dioxide gas, and the like. As these gases, a high purity gas of 99.9 vol% or more is preferably used. By using such a high purity gas, there is a tendency that it becomes easy to produce carbon black having a small amount of magnetic foreign matters and stable BET specific surface area and oil absorption amount.

The content of the water vapor gas may be, for example, 0 to 80 parts by volume, preferably 0.1 to 70 parts by volume, more preferably 1 to 60 parts by volume, and still more preferably 3 to 55 parts by volume with respect to 100 parts by volume of the carbon source (for example, acetylene) in the raw material gas. When the content of the water vapor gas is in the above range, the BET specific surface area of carbon black tends to be larger.

That is, the content of the water vapor gas may be, for example, 0 to 80 parts by volume, 0 to 70 parts by volume, 0 to 60 parts by volume, 0 to 55 parts by volume, 0.1 to 80 parts by volume, 0.1 to 70 parts by volume, 0.1 to 60 parts by volume, 0.1 to 55 parts by volume, 1 to 80 parts by volume, 1 to 70 parts by volume, 1 to 60 parts by volume, 1 to 55 parts by volume, 3 to 80 parts by volume, 3 to 70 parts by volume, 3 to 60 parts by volume or 3 to 55 parts by volume with respect to 100 parts by volume of the carbon source (for example, acetylene) in the raw material gas.

In the synthesis step, it is preferable to supply the oxygen gas to the thermal decomposition unit together with the raw material gas, and it is more preferable to supply the oxygen gas to the thermal decomposition unit by injecting the oxygen gas from the periphery of the supply port for supplying the raw material gas to the thermal decomposition unit.

The cylindrical decomposition furnace preferably has an oxygen gas injection port in the vicinity of the supply port of the raw material gas, and more preferably has a plurality of injection ports provided at equal intervals so as to surround the supply port. The number of injection ports is preferably 3 or more, and more preferably 3 to 8.

In addition, the cylindrical decomposition furnace may include a nozzle having a multi-tubular structure (for example, a double tubular structure, a triple tubular structure, and the like) having a supply port for the raw material gas and an injection port for injecting the oxygen gas from around the supply port. In the case of the double tubular structure, for example, the raw material gas may be injected from the void portion on the inner cylinder side, and the oxygen gas may be injected from the void portion on the outer cylinder side. In the case of a triple tubular structure including an inner tube, a middle tube, and an outer tube, for example, oxygen gas may be injected from a void portion formed by an outer wall of the middle tube and an inner wall of the outer tube, and raw material gas may be injected from the remaining void portion.

The injection amount of oxygen gas is not particularly limited as long as the production yield of carbon black is not taken into consideration. Carbon black can be produced even if more oxygen gas than necessary is injected. The injection amount of the oxygen gas may be, for example, 0 to 300 parts by volume, 0 to 250 parts by volume, 0 to 220 parts by volume, or 0 to 200 parts by volume with respect to 100 parts by volume of the carbon source (for example, acetylene) in the raw material gas, and is preferably 0.1 to 190 parts by volume, more preferably 0.5 to 180 parts by volume, and still more preferably 1 to 160 parts by volume. When the injection amount of oxygen gas increases, the BET specific surface area of carbon black and the ratio (S₂/S₁) tend to increase, and when the injection amount of oxygen gas decreases, the average primary particle size of carbon black tends to increase.

That is, the injection amount of the oxygen gas may be, for example, 0 to 300 parts by volume, 0 to 250 parts by volume, 0 to 220 parts by volume, 0 to 200 parts by volume, 0 to 190 parts by volume, 0 to 180 parts by volume, 0 to 160 parts by volume, 0.1 to 300 parts by volume, 0.1 to 250 parts by volume, 0.1 to 220 parts by volume, 0.1 to 200 parts by volume, 0.1 to 190 parts by volume, 0.1 to 180 parts by volume, 0.1 to 160 parts by volume, 0.5 to 300 parts by volume, 0.5 to 250 parts by volume, 0.5 to 220 parts by volume, 0.5 to 200 parts by volume, 0.5 to 190 parts by volume, 0.5 to 180 parts by volume, 0.5 to 160 parts by volume, 1 to 300 parts by volume, 1 to 250 parts by volume, 1 to 220 parts by volume, 1 to 200 parts by volume, 1 to 190 parts by volume, 1 to 180 parts by volume, or 1 to 160 parts by volume with respect to 100 parts by volume of the carbon source (for example, acetylene) in the raw material gas.

In the synthesis step, for example, the average primary particle size, the BET specific surface area, and the crystallite size (Lc) of the obtained carbon black can be adjusted by adjusting the addition rate of hydrocarbons other than acetylene, the amount of oxygen gas to be injected, and the like.

The purification step is a step of removing magnetic foreign matters from the carbon black obtained in the synthesis step by using a magnet. The purification step may be, for example, a step of removing magnetic foreign matters from carbon black by bringing the carbon black obtained in the synthesis step into contact with a magnet or disposing the carbon black in the vicinity of the magnet (for example, the magnet is allowed to pass through the vicinity of the magnet).

The maximum surface magnetic flux density of the magnet is not particularly limited, and may be, for example, 700 mT or more, preferably 1000 mT or more, and more preferably 1200 mT or more. As a result, fine magnetic foreign matter adhering to the carbon black is more strongly adsorbed, so that carbon black having a smaller nickel content is easily obtained. The upper limit of the maximum surface magnetic flux density of the magnet is not particularly limited, and may be, for example, 1400 mT or less.

That is, the maximum surface magnetic flux density of the magnet may be, for example, 700 to 1400 mT, 1000 to 1400 mT, or 1200 to 1400 mT.

The purification step may be a step of removing magnetic foreign matters from carbon black so that the nickel content is 50 ppb or less (preferably 40 ppb or less, more preferably 30 ppb or less, and still more preferably 20 ppb or less). The lower limit of the nickel content is not particularly limited, but the nickel content in the carbon black may be, for example, 1 ppb or more, and may be 10 ppb or more or 15 ppb or more from the viewpoint of cost and productivity.

That is, the nickel content in the carbon black may be, for example, 1 to 50 ppb, 1 to 40 ppb, 1 to 30 ppb, 1 to 20 ppb, 10 to 50 ppb, 10 to 40 ppb, 10 to 30 ppb, 10 to 20 ppb, 15 to 50 ppb, 15 to 40 ppb, 15 to 30 ppb, or 15 to 20 ppb.

### <Liquid Medium>

The liquid medium is not particularly limited as long as it is a dispersion medium capable of finely dispersing carbon black. Examples of the liquid medium include water, N-methyl-2 pyrrolidone, cyclohexane, methyl ethyl ketone, and methyl isobutyl ketone, and among these, N-methyl-2 pyrrolidone is preferable from the viewpoint of easy dispersibility of carbon black. In the present specification, N-methyl-2 pyrrolidone may be abbreviated as "NMP".

The content of carbon black in the slurry of the present embodiment may be, for example, 1% by mass or more, 3% by mass or more, 5% by mass or more, or 10% by mass or more. When the content of carbon black is large, it tends to be easy to prepare a coating liquid for electrode formation having a high solid content concentration. The content of carbon black in the slurry of the present embodiment may be, for example, 30 mass% or less, 25 mass% or less, 20 mass% or less, or 15 mass% or less based on the total amount of the slurry. When the content of carbon black is small, a coating liquid for electrode formation having a low viscosity is easily obtained, and a uniform electrode is easily obtained when the coating liquid for electrode formation is applied.

That is, the content of carbon black in the slurry of the present embodiment may be, for example, 1 to 30 mass%, 1 to 25 mass%, 1 to 20 mass%, 1 to 15 mass%, 3 to 30 mass%, 3 to 25 mass%, 3 to 20 mass%, 3 to 15 mass%, 5 to 30 mass%, 5 to 25 mass%, 5 to 20 mass%, 5 to 15 mass%, 10 to 30 mass%, 10 to 25 mass%, 10 to 20 mass%, or 10 to 15 mass%.

### <Dispersant>

The slurry of the present embodiment may further contain a dispersant. The dispersant may be a component having a function of assisting fine dispersion of carbon black in a liquid medium.

Examples of the dispersant include a polymer type dispersant and a low molecular type dispersant, and a polymer type dispersant is preferable from the viewpoint of long-term dispersion stability of carbon black.

The dispersant may be, for example, a dispersant selected from the group consisting of polyvinyl alcohol, polyvinyl pyrrolidone, polyvinyl butyral, carboxymethyl cellulose and salts thereof, polyvinyl acetal, polyvinyl acetate, polyvinyl amine, and polyvinyl formal.

The content of the dispersant in the slurry of the present embodiment may be, for example, 1 part by mass or more, 3 parts by mass or more, 7 parts by mass or more, or 11 parts by mass or more with respect to 100 parts by mass of the carbon black. When the content of the dispersant is large, the conductive material tends to be more uniformly and finely dispersed, and more excellent battery characteristics tend to be easily obtained. In addition, the content of the dispersant in the slurry of the present embodiment may be, for example, 50 parts by mass or less, 30 parts by mass or less, 20 parts by mass or less, or 15 parts by mass or less with respect to 100 parts by mass of the carbon black. When the content of the dispersant is small, the insulating component in the coating liquid for electrode formation is reduced, and the resistance of the electrode is reduced, so that more excellent battery characteristics tend to be easily obtained.

That is, the content of the dispersant in the slurry of the present embodiment may be, for example, 1 to 50 parts by mass, 1 to 30 parts by mass, 1 to 20 parts by mass, 1 to 15 parts by mass, 3 to 50 parts by mass, 3 to 30 parts by mass, 3 to 20 parts by mass, 3 to 15 parts by mass, 7 to 50 parts by mass, 7 to 30 parts by mass, 7 to 20 parts by mass, 7 to 15 parts by mass, 11 to 50 parts by mass, 11 to 30 parts by mass, 11 to 20 parts by mass, or 11 to 15 parts by mass with respect to 100 parts by mass of carbon black.

### <Particle Size Distribution of Carbon Black Particle Group in Slurry>

The volume-based particle size distribution of a particle group including the secondary particles of carbon black and the tertiary particles obtained by aggregation of the secondary particles of carbon black in the slurry of the present embodiment is measured by a laser diffraction/scattering method. Specifically, measurement is performed under the following conditions.
·Measuring instrument: Laser diffraction/scattering type particle size distribution measuring apparatus (Microtrac MT3300EXII manufactured by Microtrac Bell Co., Ltd.)
·Measurement conditions: Measurement range/0.02 to 2000 µm, particle permeability/absorption, particle shape/non-spherical, solvent/NMP, circulation power/5
·Sample loading: The slurry is added and adjusted so that the transmittance (TR) displayed at the time of sample loading is 0.85 to 0.9.

The secondary particles of carbon black are particles which are formed by chemically bonding carbon black primary particles and which are generally called aggregates in the classification by the structure of carbon black, and the tertiary particles of carbon black are generally called agglomerates.

In the present specification, D10 means a particle size (10% diameter) (µm) at an integrated value of 10% in the particle size distribution, D50 means a particle size (50% diameter) (µm) at an integrated value of 50% in the particle size distribution, and D90 means a particle size (90% diameter) (µm) at an integrated value of 90% in the particle size distribution.

D50 in the particle size distribution is 0.5 µm or more, and may be 0.6 µm or more or 0.7 µm or more. D50 in the particle size distribution is 0.9 µm or less.

That is, D50 in the particle size distribution may be, for example, 0.5 to 0.9 µm, 0.6 to 0.9 µm, or 0.7 to 0.9 µm.

The ratio of D50 to the difference between D10 and D90 in the particle size distribution (D50/(D90 - D10)) is 0.25 or more, and may be 0.26 or more or 0.27 or more. The ratio of D50 to the difference between D10 and D90 in the particle size distribution (D50/(D90 - D10)) is 0.5 or less, and may be 0.48 or less or 0.46 or less.

That is, the ratio of D50 to the difference between D10 and D90 in the particle size distribution (D50/(D90 - D10)) may be, for example, 0.25 to 0.5, 0.25 to 0.48, 0.25 to 0.46, 0.26 to 0.5, 0.26 to 0.48, 0.26 to 0.46, 0.27 to 0.5, 0.27 to 0.48, or 0.27 to 0.46.

When the D50 and the ratio (D50/(D90 - D10)) in the slurry of the present embodiment are in the above ranges, the carbon black can efficiently form a conductive path in the electrode, and the carbon black can be finely dispersed in a suitable dispersed state in the coating liquid for electrode formation described later.

In the present embodiment, the D50 and the ratio (D50/(D90 - D10)) can be adjusted by appropriately selecting a mixing method (for example, stirring means, stirring time, and the like) at the time of slurry formation.

### <Other Components>

The slurry of the present embodiment may further contain components other than the carbon black, the dispersant, and the liquid medium. Examples of other components include carbon nanotubes, graphite, graphene, a binding material, a dispersion stabilizer, and a defoaming agent.

The content of other components in the slurry of the present embodiment may be, for example, 10 mass% or less, 5 mass% or less, 3 mass% or less, 1 mass% or less, 0.5 mass% or less, or 0.1 mass% or less, or may be 0 mass%.

### <Viscosity of Slurry>

The viscosity of the slurry of the present embodiment at 25°C and a shear rate of 10 (1/sec) is desirably, for example, 100 to 1300 mPa·sec from the viewpoint of increasing the solid content concentration of the coating liquid for electrode formation and easily obtaining a uniform positive electrode.

### <Method for Producing Slurry>

The slurry of the present embodiment can be produced by blending carbon black, a liquid medium, and if necessary, a dispersant, and mixing/finely dispersing the secondary particles and the tertiary particles of the carbon black in the liquid medium so as to exhibit a predetermined particle size distribution in the present invention.

The mixing/finely dispersing method is not particularly limited, and may be performed by a known method (for example, stirring and mixing with a bead mill, a ball mill, a Sandoz mill, a twin-screw kneader, a rotation-revolution stirrer, a planetary mixer, a disperser mixer, or the like). These methods and devices can be adopted in appropriate combination.

Various conditions in the mixing/finely dispersing method may be appropriately adjusted so that D50 and the ratio (D50/(D90 - D10)) are within the above ranges. For example, by increasing the stirring time, the D50 tends to decrease, and the ratio (D50/(D90 - D10)) tends to increase. When the stirring time is shortened, D50 tends to increase, and the ratio (D50/(D90 - D10)) tends to decrease.

### <Method for Producing Electrodes>

A method for producing electrodes according to the present embodiment includes: a coating liquid preparation step of mixing a slurry, a binding material solution containing a binding material in a liquid medium, and an active material to obtain a coating liquid for electrode formation; an application step of applying the coating liquid for electrode formation on a current collector; and an electrode formation step of forming a mixture layer on the current collector by removing at least a part of the liquid medium to form an electrode including the current collector and the mixture layer.

### <Binding Material Solution>

The binding material solution is a solution containing a binding material agent in a liquid medium.

As the liquid medium in the binding material solution, the same liquid medium as the liquid medium in the slurry can be exemplified. The liquid medium in the binding material solution may be the same as or different from the liquid medium in the slurry, and is preferably the same.

Examples of the binding material include polyvinylidene fluoride, polytetrafluoroethylene, a styrene-butadiene copolymer, and a (meth) acrylic acid ester copolymer. The structure of the polymer of the binding material may be, for example, a random copolymer, an alternating copolymer, a graft copolymer, a block copolymer, or the like. As the binding material, polyvinylidene fluoride is preferable from the viewpoint of excellent withstand voltage.

The binding material solution may further contain components other than the binding material and the liquid medium. Examples of other components in the binding material solution include a conductive material, a thickener, and a surfactant.

The solid content concentration in the binding material solution is not particularly limited, and may be, for example, 1% by mass or more, 2% by mass or more, or 3% by mass or more. In addition, the solid content concentration in the binding material solution may be, for example, 15 mass% or less, 13 mass% or less, or 10 mass% or less.

That is, the solid content concentration in the binding material solution may be, for example, 1 to 15 mass%, 1 to 13 mass%, 1 to 10 mass%, 2 to 15 mass%, 2 to 13 mass%, 2 to 10 mass%, 3 to 15 mass%, 3 to 13 mass%, or 3 to 10 mass%.

### <Active Material>

The active material is not particularly limited, and for example, any one of a positive electrode active material and a negative electrode active material can be selected and used.

The type of the positive electrode active material is not particularly limited as long as it is a material capable of reversibly occluding and releasing cations. The positive electrode active material may be, for example, a lithium-containing composite oxide containing manganese having a volume resistivity of 1×10⁴ Ω·cm or more, or a lithium-containing polyanion compound. Examples of the lithium-containing composite oxide containing manganese include lithium manganate such as LiMnO₂, LiMnO₃, LiMn₂O₃, and Li₁₊ₓMn₂₋ₓO₄ (where x = 0 to 0.33); and composite oxides containing one or more kinds of transition metal elements such as LiMnₓNi_{y}Co_{z}O₂ (where x + y + z = 1, 0 ≤ y < 1, 0 ≤ z < 1, and 0 ≤ x < 1), Li₁₊ₓMn_{2-x-y}M_{y}O₄ (where x = 0 to 0.33, y = 0 to 1.0, and 2 - x - y > 0), LiMn₂₋ₓMₓO₂ (where x = 0.01 to 0.1), and Li₂Mn₃MO₈. Examples of the lithium-containing polyanion compound include polyanion compounds such as LiFePO₄, LiMnPO₄, and Li₂MPO₄F (where M is at least one metal selected from Co, Ni, Fe, Cr, and Zn). M in each composition formula is at least one selected from the group consisting of Fe, Co, Ni, Al, Cu, Mg, Cr, Zn, and Ta.

The active material may be a negative electrode active material. Examples of the negative electrode active material include carbonaceous materials such as natural graphite, artificial graphite, graphite, activated carbon, coke, needle coke, flushed coke, mesophase microbeads, carbon fiber, and pyrolytic carbon.

### <Coating Liquid Preparation Step>

The method for mixing various components in the coating liquid preparation step is not particularly limited, and the mixing may be performed by a known method (for example, stirring and mixing with a ball mill, a Sandoz mill, a twin-screw kneader, a rotation-revolution type stirrer, a planetary mixer, a disperser mixer, or the like).

The coating liquid for electrode formation contains carbon black contained in the slurry, the binding material contained in the binding material solution, the active material, and the liquid medium independently contained in the slurry and the binding material solution. The coating liquid for electrode formation may further contain a liquid medium (additional liquid medium) used in the coating liquid preparation step in addition to the liquid medium contained independently in the slurry and the binding material solution. The coating liquid for electrode formation may further contain a dispersant.

The content of carbon black in the coating liquid for electrode formation may be, for example, 0.01 mass% or more, 0.04 mass% or more, 0.07 mass% or more, or 0.1 mass% or more based on the total amount of the solid content. The content of carbon black in the coating liquid for electrode formation may be, for example, 8% by mass or less, 7% by mass or less, 6% by mass or less, or 5% by mass or less based on the total amount of the solid content.

That is, the content of the carbon black in the coating liquid for electrode formation may be, for example, 0.01 to 8 mass%, 0.01 to 7 mass%, 0.01 to 6 mass%, 0.01 to 5 mass%, 0.04 to 8 mass%, 0.04 to 7 mass%, 0.04 to 6 mass%, 0.04 to 5 mass%, 0.07 to 8 mass%, 0.07 to 7 mass%, 0.07 to 6 mass%, 0.07 to 5 mass%, 0.1 to 8 mass%, 0.1 to 7 mass%, 0.1 to 6 mass%, or 0.1 to 5 mass% based on the total amount of the solid content.

The content of the binding material in the coating liquid for electrode formation may be, for example, 0.01 mass% or more, 0.02 mass% or more, 0.03 mass% or more, 0.04 mass% or more, or 0.05 mass% or more based on the total amount of the solid content. In addition, the content of the binding material in the coating liquid for electrode formation may be, for example, 10 mass% or less, 8 mass% or less, 6 mass% or less, or 4 mass% or less based on the total amount of the solid content.

That is, the content of the binding material in the coating liquid for electrode formation may be, for example, 0.01 to 10 mass%, 0.01 to 8 mass%, 0.01 to 6 mass%, 0.01 to 4 mass%, 0.02 to 10 mass%, 0.02 to 8 mass%, 0.02 to 6 mass%, 0.02 to 4 mass%, 0.03 to 10 mass%, 0.03 to 8 mass%, 0.03 to 6 mass%, 0.03 to 4 mass%, 0.04 to 10 mass%, 0.04 to 8 mass%, 0.04 to 6 mass%, 0.04 to 4 mass%, 0.05 to 10 mass%, 0.05 to 8 mass%, 0.05 to 6 mass%, or 0.05 to 4 mass% based on the total amount of the solid content.

The content of the active material in the coating liquid for electrode formation may be, for example, 70 mass% or more, 75 mass% or more, or 80 mass% or more based on the total amount of the solid content. In addition, the content of the active material in the coating liquid for electrode formation may be, for example, 99 mass% or less, 98.9 mass% or less, or 98.8 mass% or less based on the total amount of the solid content.

That is, the content of the active material in the coating liquid for electrode formation may be, for example, 70 to 99 mass%, 70 to 98.9 mass%, 70 to 98.8 mass%, 75 to 99 mass%, 75 to 98.9 mass%, 75 to 98.8 mass%, 80 to 99 mass%, 80 to 98.9 mass%, or 80 to 98.8 mass% based on the total amount of the solid content.

The content of the dispersant in the coating liquid for electrode formation may be, for example, 0.001 mass% or more, 0.004 mass% or more, 0.007 mass% or more, or 0.01 mass% or more based on the total amount of the solid content. In addition, the content of the dispersant in the coating liquid for electrode formation may be, for example, 0.8 mass% or less, 0.7 mass% or less, 0.6 mass% or less, or 0.5 mass% or less based on the total amount of the solid content.

That is, the content of the dispersant in the coating liquid for electrode formation may be, for example, 0.001 to 0.8 mass%, 0.001 to 0.7 mass%, 0.001 to 0.6 mass%, 0.001 to 0.5 mass%, 0.004 to 0.8 mass%, 0.004 to 0.7 mass%, 0.004 to 0.6 mass%, 0.004 to 0.5 mass%, 0.007 to 0.8 mass%, 0.007 to 0.7 mass%, 0.007 to 0.6 mass%, 0.007 to 0.5 mass%, 0.01 to 0.8 mass%, 0.01 to 0.7 mass%, 0.01 to 0.6 mass%, or 0.01 to 0.5 mass% based on the total amount of the solid content.

The content of the dispersant in the coating liquid for electrode formation may be, for example, 1 part by mass or more, 3 parts by mass or more, 7 parts by mass or more, or 11 parts by mass or more with respect to 100 parts by mass of carbon black. The content of the dispersant in the coating liquid for electrode formation may be, for example, 50 parts by mass or less, 30 parts by mass or less, 20 parts by mass or less, or 15 parts by mass or less with respect to 100 parts by mass of carbon black.

That is, the content of the dispersant in the coating liquid for electrode formation may be, for example, 1 to 50 parts by mass, 1 to 30 parts by mass, 1 to 20 parts by mass, 1 to 15 parts by mass, 3 to 50 parts by mass, 3 to 30 parts by mass, 3 to 20 parts by mass, 3 to 15 parts by mass, 7 to 50 parts by mass, 7 to 30 parts by mass, 7 to 20 parts by mass, 7 to 15 parts by mass, 11 to 50 parts by mass, 11 to 30 parts by mass, 11 to 20 parts by mass, or 11 to 15 parts by mass with respect to 100 parts by mass of carbon black.

The solid content concentration of the coating liquid for electrode formation, that is, the concentration of the ratio of carbon black carried from the slurry in the coating liquid for electrode formation to the dispersant, and further to the net binding material and active material may be, for example, 50 mass% or more, 55 mass% or more, 60 mass% or more, or 65 mass% or more. The solid content concentration of the coating liquid for electrode formation may be, for example, 90 mass% or less, 85 mass% or less, 82 mass% or less, 77 mass% or less, 75 mass% or less, 73 mass% or less, or 70 mass% or less.

That is, the solid content concentration of the coating liquid for electrode formation may be, for example, 50 to 90 mass%, 50 to 85 mass%, 50 to 82 mass%, 50 to 77 mass%, 50 to 75 mass%, 50 to 73 mass%, 50 to 70 mass%, 55 to 90 mass%, 55 to 85 mass%, 55 to 82 mass%, 55 to 77 mass%, 55 to 75 mass%, 55 to 73 mass%, 55 to 70 mass%, 60 to 90 mass%, 60 to 85 mass%, 60 to 82 mass%, 60 to 77 mass%, 60 to 75 mass%, 60 to 73 mass%, 60 to 70 mass%, 65 to 90 mass%, 65 to 85 mass%, 65 to 82 mass%, 65 to 77 mass%, 65 to 75 mass%, 65 to 73 mass%, or 65 to 70 mass%.

### <Electrode Forming Step>

In the electrode forming step, a coating liquid for electrode formation is applied onto the current collector to form a mixture layer on the current collector. As a result, an electrode including the current collector and the mixture layer is obtained. The mixture layer is a layer containing a solid content (carbon black, binding material, and active material (further dispersant as necessary)) in the coating liquid for electrode formation, and may be a layer obtained by removing at least a part of the liquid medium from the coating liquid for electrode formation.

The current collector is not particularly limited, and a known current collector can be used without particular limitation. As the current collector, for example, a metal foil (metals such as gold, silver, copper, platinum, aluminum, iron, nickel, chromium, manganese, lead, tungsten, and titanium, and alloys containing any one of these as a main component) is used. Among them, aluminum is preferably used for the positive electrode, and copper is preferably used for the negative electrode. The current collector is generally provided in the form of a foil, but is not limited thereto, and a perforated foil-like or mesh-like current collector can also be used.

The method for applying the coating liquid for electrode formation on the current collector is not particularly limited, and may be, for example, a die coating method, a dip coating method, a roll coating method, a doctor coating method, a knife coating method, a spray coating method, a gravure coating method, a screen printing method, an electrostatic coating method, or the like.

The application amount of the coating liquid for electrode formation is not particularly limited, and may be appropriately adjusted so that the thickness of the mixture layer falls within a desired range.

The mixture layer may be formed by removing at least a part of the liquid medium from the coating film of the coating liquid for electrode formation formed on the current collector. The method for removing the liquid medium is not particularly limited, and examples of the method for vaporizing and removing at least a part of the liquid medium by heating and/or pressure reduction include leaving and drying, a blower dryer, a warm air dryer, an infrared heater, and a far infrared heater.

The method for producing electrodes according to the present embodiment may further include a pressurizing step of pressurizing the mixture layer formed in the electrode forming step and the current collector in the stacking direction. The mixture layer and the current collector can be brought into close contact with each other by the pressurizing step.

The pressurization method in the pressurization step is not particularly limited, and may be, for example, a method such as roll pressing, die pressing, or calender pressing.

The thickness of the mixture layer in the electrode is not particularly limited, and may be, for example, 50 µm or more, and from the viewpoint of increasing the capacity of the battery, the thickness is preferably 55 µm or more, more preferably 60 µm or more, and may be 65 µm or more or 70 µm or more. In addition, the thickness of the mixture layer in the electrode may be, for example, 150 µm or less, and from the viewpoint of further improving the discharge rate characteristics, the thickness is preferably 140 µm or less, more preferably 130 µm or less, and may be 120 µm or less or 110 µm or less.

That is, the thickness of the mixture layer in the electrode may be, for example, 50 to 150 µm, 50 to 140 µm, 50 to 130 µm, 50 to 120 µm, 50 to 110 µm, 55 to 150 µm, 55 to 140 µm, 55 to 130 µm, 55 to 120 µm, 55 to 110 µm, 60 to 150 µm, 60 to 140 µm, 60 to 130 µm, 60 to 120 µm, 60 to 110 µm, 65 to 150 µm, 65 to 140 µm, 65 to 130 µm, 65 to 120 µm, 65 to 110 µm, 70 to 150 µm, 70 to 140 µm, 70 to 130 µm, 70 to 120 µm, or 70 to 110 µm.

The electrode produced by the producing method of the present embodiment can be suitably used as an electrode of a battery, particularly a secondary battery (lithium ion secondary battery).

The electrode of the present embodiment is an electrode including a mixture layer containing carbon black, an active material, and a binding material, and the mixture layer may further contain a dispersant. The electrode of the present embodiment may be, for example, a positive electrode produced by the above-described producing method.

The battery (preferably a secondary battery, and more preferably a lithium ion secondary battery) in the present embodiment includes a positive electrode produced by the above-described producing method. In the battery of the present embodiment, the configuration other than the positive electrode may be the same as that of a known battery.

The application of the battery in the present embodiment is not particularly limited, and for example, the battery can be used in a wide range of fields such as portable AV devices such as a digital camera, a video camera, a portable audio player, and a portable liquid crystal television; portable information terminals such as a notebook personal computer, a smartphone, and a mobile PC; portable game devices; electric tools; electric bicycles; hybrid cars; electric cars; and power storage systems.

Although the preferred embodiments of the present invention have been described above, the present invention is not limited to the above embodiments.

### Examples

Hereinafter, the present invention will be described in more detail with reference to examples, but the present invention is not limited to these examples.

### <Example 1>

### (Production of Carbon Black A)

Carbon black has been produced by supplying acetylene, which is a raw material, at 12 Nm³/h, toluene at 32 kg/h, and oxygen at 20Nm³/h from a nozzle installed in an upstream part of carbon black reaction furnace (furnace length: 6 m, furnace diameter: 0.65 m), and the carbon black has been collected by a bag filter installed in a downstream part of the reaction furnace. Thereafter, the carbon black has been passed through a dry cyclone device and an iron removing magnet and collected in a tank. It is to be noted that acetylene, toluene, and oxygen have been heated to 115°C and then supplied to a reaction furnace to obtain carbon black A. The obtained carbon black A has an average primary particle size of 20 nm, a crystallite size (Lc) of 16Å, and a BET specific surface area of 240 m²/g.

In addition, the carbon black A has been set in a gas chromatography-mass spectrometry (GC/MS: QP-2010 manufactured by Shimadzu Co., pyrolyzer: Py-2020iD manufactured by Frontier Laboratories, Inc.), and held at 50°C for 5 minutes in an atmospheric pressure He flow, and then the temperature has been increased to 800°C at 80°C/min. The components desorbed by the temperature increase have been subjected to mass spectrometry under the following conditions, and a peak area S₁ of the peak having the mass number of m/z of 57 and a peak area S₂ of the peak having the mass number of m/z of 128 of the obtained carbon black A have been measured. A ratio (S₂/S₁) has been calculated from the peak area S₁ of the peak having the mass number of m/z of 57 and the peak area S₂ of the peak having the mass number of m/z of 128 of the measured carbon black A, and the result is 0.40.
Column: Ultra ALLOY-DTM (Length 2.5 m, 0.15 mmI.D, 0.47 mmO.D) manufactured by Frontier Lab Co., Ltd.
Sample introduction temperature: 300°C
Column temperature: 300°C, hold for 80 minutes
Split ratio: 30:1
Column flow rate: 1.0 mL/min
Ionization method: EI
Measurement mass number range: m/z = 10 to 200

### (Production of Slurry)

To 86.6 mass% of NMP as a liquid medium, 1.4 mass% of polyvinyl alcohol (Poval B05 manufactured by Denka Company Ltd., saponification degree: 87%) as a dispersant and 12.0 mass% of the carbon black A have been added, and the mixture has been stirred at 70 rpm for 3 hours using a planetary mixer (HIVISMIX 3D-5, manufactured by Primix Co.) to prepare a slurry containing carbon black. The obtained slurry has been subjected to a dispersion treatment for 54 minutes in a bead mill (Mugenflow MGF2-ZA, manufactured by Ashizawa Finetech Co., Ltd.) equipped with zirconia beads (diameter: 0.5 mm) under conditions of a slurry flow rate of 1 kg/min and a mill peripheral speed of 8 m/s. After the dispersion treatment, the zirconia beads have been removed by filtration to obtain the slurry of Example 1.

The frequency distribution and cumulative distribution of the volume-based particle size of carbon black in the obtained slurry have been measured according to the following method using a laser diffraction/scattering type particle size distribution measuring apparatus (Microtrac MT3300EXII manufactured by Microtrac Bell Co., Ltd.), and D10, D50, and D90 have been determined.

Measurement conditions: Measurement range/0.02 to 2000 µm, particle permeability/absorption, particle shape/non-spherical, solvent/NMP, circulation power/5

Sample loading: The slurry has been added and adjusted to be in the optimal concentration range displayed at sample loading.

### (Production of Coating Liquid for Electrode Formation)

Using the slurry obtained as described above, an NMP solution of polyvinylidene fluoride (binding material), a lithium nickel cobalt manganese composite oxide LiNi_{0.6}Mn_{0.2}Co_{0.2}O₂ (positive electrode active material, "ME6E" manufactured by Beijing Tosho Co., Ltd.), and NMP, the amount of NMP has been adjusted such that the solid content, that is, the concentration of the carbon black and the dispersant (1.0 parts by mass) carried in from the slurry, and the ratio (100 parts by mass in total) of the net binding material (2.0 parts by mass) and the positive electrode active material (97 parts by mass) has become 69 mass% of the entire coating liquid for electrode formation, and thus the coating liquid for electrode formation of Example 1 has been obtained.

### (Production of Positive Electrode)

The obtained coating liquid for electrode formation has been applied onto an aluminum foil (manufactured by UACJ) having a thickness of 15 µm using a Baker type applicator, and dried at 105°C for 1 hour to completely remove NMP. Thereafter, pressing and cutting have been performed to produce a positive electrode.

### (Production of Negative Electrode)

Pure water (manufactured by Kanto Chemical Co., Inc.) has been provided as a solvent, artificial graphite ("MAG-D" manufactured by Hitachi Chemical Co., Ltd.) has been provided as a negative electrode active material, styrene butadiene rubber ("BM-400B" manufactured by Zeon Co., hereinafter referred to as SBR) has been provided as a binding material, carboxymethyl cellulose ("D 2200" manufactured by Daicel Co., hereinafter referred to as CMC) has been provided as a dispersant, and carbon black ("Li-400" manufactured by Denka Company Ltd.) has been provided as a conductive material. Subsequently, CMC, carbon black, and artificial graphite have been weighed and mixed so as to be 1% by mass in terms of solid content, 1% by mass, and 96% by mass, respectively, pure water has been added to this mixture, and the mixture has been mixed until it has become uniform using a rotating and revolving mixer (Awatori Rentaro ARV-310 manufactured by Thinky Co.), thereby obtaining a mixture. Subsequently, the SBR has been weighed so as to be 2% by mass in terms of solid content, added to the obtained mixture, and mixed until the mixture has become uniform using a rotating and revolving mixer (Awatori Rentaro ARV-310 manufactured by Thinky Co.) to obtain a coating liquid for negative electrode formation. Subsequently, the coating liquid for forming a negative electrode has been deposited on a copper foil (manufactured by UACJ) having a thickness of 10 µm by an applicator to prepare a laminate, and the laminate has been left standing in a dryer and preliminarily dried at 60°C for 1 hour. Next, the laminate has been pressed with a roll press machine at a linear pressure of 50 kg/cm to prepare the laminate such that the thickness of the entire laminate has been 60 µm. Subsequently, vacuum drying has been performed at 120°C for 3 hours to completely remove residual moisture, thereby obtaining a negative electrode including a current collector and a mixture layer.

### (Production of Battery)

A positive electrode, a separator, and a negative electrode have been stacked and laminated, and then packed and pre-sealed with an aluminum laminate film. Subsequently, an electrolytic solution has been injected, and battery formatting and vacuum sealing have been performed to prepare a laminated secondary battery.

### (Evaluation of Battery)

The evaluation of the battery in each of the examples and the comparative examples showing the effect of the present invention has been all measured by the method described in the description of Example 1. It is appropriate to compare these results in the same table using the same kind of carbon black except for Table 4.

### [Discharge Rate Characteristics (Rate Capacity Retention)]

The prepared battery has been charged at a constant current and a constant voltage limited to 4.3 V and 0.2 C at 25°C, and then discharged to 3.0 V at a constant current of 0.2 C. Next, the secondary battery has been charged again to be recovered at a constant current and a constant voltage limited to 4.3 V and 0.2 C, and then discharged to 3.0 V at a constant current of 0.2 C, and the discharge capacity at this time has been measured. Next, as conditions of recovery charge, charging has been performed with a constant current and a constant voltage limited to 4.3 V and 0.2 C, and on the other hand, while the discharge current has been changed stepwise to 0.5 C, 1 C, 2 C, and 3 C, recovery charge and discharge have been repeated, and the discharge capacity for each discharge current has been measured. As an index of the discharge rate characteristics of the battery, the capacity retention rate during 3 C discharge with respect to 0.2 C discharge has been calculated as a rate capacity retention.

### [Cycle Characteristics (Cycle Capacity Retention)]

The prepared battery has been charged at a constant current and a constant voltage limited to 4.3 V and 0.1 C at 25°C, and then discharged to 3.0 V at a constant current of 0.1 C. The charging and discharging have been repeated 500 cycles, and the discharge capacity in each cycle has been measured. As an index of the cycle characteristics of the battery, the capacity retention after 500 cycles with respect to the capacity retention after 1 cycle has been calculated as a cycle capacity retention.

### [Peeling Strength]

The coating liquid for electrode formation has been applied onto an aluminum foil (manufactured by UACJ) having a thickness of 15 µm using a Baker type applicator, and dried at 105°C for 1 hour to completely remove NMP.

Thereafter, the resulting positive electrode has been subjected to a peeling test at 180°C using a peeling strength tester (AGS-X manufactured by Shimadzu Co.) by pressing and cutting. In the peeling test, the peeling strength between the aluminum foil and the electrode mixture has been measured under the conditions of a unit weight of 19.5 to 20 mg/cm², a density of 3.4 mg/cm³, a test piece width of 2 cm, and a tensile speed of 50 mm/min. The average of the test forces N in the range where the stroke width of the peeled plate has been 30 to 70 mm has been calculated as the peeling strength.

### <Example 2>

### (Production of Slurry)

To 86.6 mass% of NMP, 1.4 mass% of polyvinyl alcohol (Poval B05 manufactured by Denka Company Ltd., saponification degree: 87%) as a dispersant and 12.0 mass% of the carbon black A have been added, and the mixture has been stirred at 70 rpm for 3 hours using a planetary mixer (HIVISMIX 3D-5, manufactured by Primix Co.) to prepare a slurry containing carbon black. The obtained slurry has been subjected to a dispersion treatment for 60 minutes in a bead mill (Mugenflow MGF2-ZA, manufactured by Ashizawa Finetech Co., Ltd.) equipped with zirconia beads (diameter: 0.5 mm) under conditions of a slurry flow rate of 1 kg/min and a mill peripheral speed of 8 m/s. After the dispersion treatment, the zirconia beads have been removed by filtration to obtain the slurry of Example 2.

Using this slurry, production of a coating liquid for electrode formation, production of a positive electrode, production of a negative electrode, and production of a battery have been performed in the same manner as in Example 1, and each evaluation has been performed.

### <Example 3>

### (Production of Slurry)

To 86.6 mass% of NMP, 1.4 mass% of polyvinyl alcohol (Poval B05 manufactured by Denka Company Ltd., saponification degree: 87%) as a dispersant and 12.0 mass% of the carbon black A have been added, and the mixture has been stirred at 70 rpm for 3 hours using a planetary mixer (HIVISMIX 3D-5, manufactured by Primix Co.) to prepare a slurry containing carbon black. The obtained slurry has been subjected to a dispersion treatment for 45 minutes in a bead mill (Mugenflow MGF2-ZA, manufactured by Ashizawa Finetech Co., Ltd.) equipped with zirconia beads (diameter: 0.5 mm) under conditions of a slurry flow rate of 1 kg/min and a mill peripheral speed of 8 m/s. After the dispersion treatment, the zirconia beads have been removed by filtration to produce the slurry of Example 3.

Using this slurry, production of a coating liquid for electrode formation, production of a positive electrode, production of a negative electrode, and production of a battery have been performed in the same manner as in Example 1, and each evaluation has been performed.

### <Comparative Example 1>

### (Production of Slurry)

To 86.6 mass% of NMP, 1.4 mass% of polyvinyl alcohol (Poval B05 manufactured by Denka Company Ltd., saponification degree: 87%) as a dispersant and 12.0 mass% of the carbon black A have been added, and the mixture has been stirred at 70 rpm for 3 hours by a planetary mixer (HIVISMIX 3D-5, manufactured by Primix Co.) to prepare a slurry containing carbon black. The obtained slurry has been subjected to a dispersion treatment for 18 minutes in a bead mill (Mugenflow MGF2-ZA, manufactured by Ashizawa Finetech Co., Ltd.) equipped with zirconia beads (diameter: 0.5 mm) under conditions of a slurry flow rate of 1 kg/min and a mill peripheral speed of 8 m/s. After the dispersion treatment, the zirconia beads have been removed by filtration to produce the slurry of Comparative Example 1.

Using this slurry, production of a coating liquid for electrode formation, production of a positive electrode, production of a negative electrode, and production of a battery have been performed in the same manner as in Example 1, and each evaluation has been performed.

### <Comparative Example 2>

### (Production of Slurry)

To 86.6 mass% of NMP, 1.4 mass% of polyvinyl alcohol (Poval B05 manufactured by Denka Company Ltd., saponification degree: 87%) as a dispersant and 12.0 mass% of the carbon black A have been added, and the mixture has been stirred at 70 rpm for 3 hours by a planetary mixer (HIVISMIX 3D-5, manufactured by Primix Co.) to prepare a slurry containing carbon black. The obtained slurry has been subjected to a dispersion treatment for 198 minutes in a bead mill (Mugenflow MGF2-ZA, manufactured by Ashizawa Finetech Co., Ltd.) equipped with zirconia beads (diameter: 0.5 mm) under conditions of a slurry flow rate of 1 kg/min and a mill peripheral speed of 8 m/s. After the dispersion treatment, the zirconia beads have been removed by filtration to produce the slurry of Comparative Example 2.

Using this slurry, production of a coating liquid for electrode formation, production of a positive electrode, production of a negative electrode, and production of a battery have been performed in the same manner as in Example 1, and each evaluation has been performed.

The evaluation results of Examples 1 to 3 and Comparative Examples 1 and 2 are shown in Table 1. In the table, CB represents carbon black, and CBA represents carbon black A. The same applies to the following tables.

**[Table 1]**

| | | Example 1 | Example 2 | Example 3 | Comp. Example 1 | Comp. Example 2 |
|---|---|---|---|---|---|---|
| CB | Type | CBA | CBA | CBA | CBA | CBA |
| | Average primary particle size (nm) | 20 | 20 | 20 | 20 | 20 |
| | Crystallite size (Å) | 16 | 16 | 16 | 16 | 16 |
| | BET specific surface area (m²/g) | 240 | 240 | 240 | 240 | 240 |
| | Ratio (S₂/S₁) | 0.4 | 0.4 | 0.4 | 0.4 | 0.4 |
| Particle size distribution | D10 (µm) | 0.362 | 0.350 | 0.362 | 0.482 | 0.281 |
| | D50 (µm) | 0.821 | 0.755 | 0.714 | 1.445 | 0.478 |
| | D90 (µm) | 2.511 | 3.000 | 1.961 | 8.591 | 1.089 |
| | D50/(D90 - D10) | 0.38 | 0.28 | 0.45 | 0.18 | 0.59 |
| Battery evaluation | Rate capacity retention (%) | 94.8 | 95.1 | 95.2 | 90.7 | 92.7 |
| | Cycle capacity retention (%) | 93.5 | 94.2 | 93.8 | 88.4 | 89.8 |
| | Peeling strength (N/m) | 78 | 81 | 80 | 98 | 72 |

### <Example 4>

### (Production of Coating Liquid for Electrode Formation)

The slurry of Example 3, an NMP solution of polyvinylidene fluoride (binding material), lithium nickel cobalt manganese composite oxide LiNi_{0.6}Mn_{0.2}Co_{0.2}O₂ (positive electrode active material, "ME6E" manufactured by Beijing Tosho Co., Ltd.), and NMP have been mixed so that the carbon black is 1.0 parts by mass, the binding material is 1.3 parts by mass, the positive electrode active material is 97.7 parts by mass, and the solid content concentration is 69.5 mass% to obtain a coating liquid for electrode formation.

Using the obtained coating liquid for electrode formation, production of a positive electrode, production of a negative electrode, and production of a battery have been performed in the same manner as in Example 1, and each evaluation has been performed.

### <Example 5>

### (Production of Coating Liquid for Electrode Formation)

The slurry of Example 3, an NMP solution of polyvinylidene fluoride (binding material), lithium nickel cobalt manganese composite oxide LiNi_{0.6}Mn_{0.2}Co_{0.2}O₂ (positive electrode active material, "ME6E" manufactured by Beijing Tosho Co., Ltd.), and NMP have been mixed so that the carbon black is 1.0 parts by mass, the binding material is 2.5 parts by mass, the positive electrode active material is 96.5 parts by mass, and the solid content concentration is 64.5 mass% to obtain a coating liquid for electrode formation.

Using the obtained coating liquid for electrode formation, production of a positive electrode, production of a negative electrode, and production of a battery have been performed in the same manner as in Example 1, and each evaluation has been performed.

### <Comparative Example 3>

### (Production of Coating Liquid for Electrode Formation)

The slurry of Comparative Example 1, an NMP solution of polyvinylidene fluoride (binding material), lithium nickel cobalt manganese composite oxide LiNi_{0.6}Mn_{0.2}Co_{0.2}O₂ (positive electrode active material, "ME6E" manufactured by Beijing Tosho Co., Ltd.), and NMP have been mixed so that the carbon black is 1.0 parts by mass, the binding material is 1.3 parts by mass, the positive electrode active material is 97.7 parts by mass, and the solid content concentration is 69.5 mass% to obtain a coating liquid for electrode formation.

Using the obtained coating liquid for electrode formation, production of a positive electrode, production of a negative electrode, and production of a battery have been performed in the same manner as in Example 1, and each evaluation has been performed.

### <Comparative Example 4>

### (Production of Coating Liquid for Electrode Formation)

The slurry of Comparative Example 1, an NMP solution of polyvinylidene fluoride (binding material), lithium nickel cobalt manganese composite oxide LiNi_{0.6}Mn_{0.2}Co_{0.2}O₂ (positive electrode active material, "ME6E" manufactured by Beijing Tosho Co., Ltd.), and NMP have been mixed so that the carbon black is 1.0 parts by mass, the binding material is 2.5 parts by mass, the positive electrode active material is 96.5 parts by mass, and the solid content concentration is 64.5 mass% to obtain a coating liquid for electrode formation.

Using the obtained coating liquid for electrode formation, production of a positive electrode, production of a negative electrode, and production of a battery have been performed in the same manner as in Example 1, and each evaluation has been performed.

The evaluation results of Examples 4 and 5 and Comparative Examples 3 and 4 are shown in Table 2.

**[Table 2]**

| | | Example 4 | Example 5 | Comp. Example 3 | Comp. Example 4 |
|---|---|---|---|---|---|
| CB | Type | CBA | CBA | CBA | CBA |
| | Average primary particle size (nm) | 20 | 20 | 20 | 20 |
| | Crystallite size (Å) | 16 | 16 | 16 | 16 |
| | BET specific surface area (m²/g) | 240 | 240 | 240 | 240 |
| | Ratio (S₂/S₁) | 0.4 | 0.4 | 0.4 | 0.4 |
| Particle size distribution | D10 (µm) | 0.362 | 0.362 | 0.482 | 0.482 |
| | D50 (µm) | 0.714 | 0.714 | 1.445 | 1.445 |
| | D90 (µm) | 1.961 | 1.961 | 8.591 | 8.591 |
| | D50/(D90 - D10) | 0.45 | 0.45 | 0.18 | 0.18 |
| Coating liquid | binding material/CB (mass ratio) | 1.3 | 2.5 | 1.3 | 2.5 |
| Battery evaluation | Rate capacity retention (%) | 91.7 | 93.1 | 75.4 | 84.4 |
| | Cycle capacity retention (%) | 89.3 | 91.3 | 67.7 | 75.9 |
| | Peeling strength (N/m) | 75 | 124 | 42 | 73 |

### <Example 6>

### (Production of Slurry)

To 85.6 mass% of NMP have been added 0.9 mass% of polyvinyl alcohol (Poval DR-1137 manufactured by Denka Company Ltd., saponification degree: 87%) as a dispersant and 13.5 mass% of carbon black (Li-435, manufactured by Denka Company Ltd., average primary particle size: 26 nm, crystallite size (Lc): 25Å, BET specific surface area: 133 m²/g, ratio (S₂/S₁): 0.23), and the mixture has been stirred at 70 rpm for 3 hours using a planetary mixer (HIVISMIX 3D-5, manufactured by Primix Co.) to prepare a slurry containing carbon black. The obtained slurry has been subjected to a dispersion treatment for 45 minutes in a bead mill (Mugenflow MGF2-ZA, manufactured by Ashizawa Finetech Co., Ltd.) equipped with zirconia beads (diameter: 0.5 mm) under conditions of a slurry flow rate of 1 kg/min and a mill peripheral speed of 8 m/s. After the dispersion treatment, the zirconia beads have been removed by filtration to produce the slurry of Example 6.

Using this slurry, production of a coating liquid for electrode formation, production of a positive electrode, production of a negative electrode, and production of a battery have been performed in the same manner as in Example 1, and each evaluation has been performed.

### <Example 7>

### (Production of Slurry)

To 85.6 mass% of NMP have been added 0.9 mass% of polyvinyl alcohol (Poval DR-1137 manufactured by Denka Company Ltd., saponification degree: 87%) as a dispersant and 13.5 mass% of carbon black (Li-435, manufactured by Denka Company Ltd.), and the mixture has been stirred at 70 rpm for 3 hours using a planetary mixer (HIVISMIX 3D-5, manufactured by Primix Co.) to prepare a slurry containing carbon black. The obtained slurry has been subjected to a dispersion treatment for 50 minutes in a bead mill (Mugenflow MGF2-ZA, manufactured by Ashizawa Finetech Co., Ltd.) equipped with zirconia beads (diameter: 0.5 mm) under conditions of a slurry flow rate of 1 kg/min and a mill peripheral speed of 8 m/s. After the dispersion treatment, the zirconia beads have been removed by filtration to produce the slurry of Example 7.

Using this slurry, production of a coating liquid for electrode formation, production of a positive electrode, production of a negative electrode, and production of a battery have been performed in the same manner as in Example 1, and each evaluation has been performed.

### <Example 8>

### (Production of Slurry)

To 85.6 mass% of NMP have been added 0.9 mass% of polyvinyl alcohol (Poval DR-1137 manufactured by Denka Company Ltd., saponification degree: 87%) as a dispersant and 13.5 mass% of carbon black (Li-435, manufactured by Denka Company Ltd.), and the mixture has been stirred at 70 rpm for 3 hours using a planetary mixer (HIVISMIX 3D-5, manufactured by Primix Co.) to prepare a slurry containing carbon black. The obtained slurry has been subjected to a dispersion treatment for 36 minutes in a bead mill (Mugenflow MGF2-ZA, manufactured by Ashizawa Finetech Co., Ltd.) equipped with zirconia beads (diameter: 0.5 mm) under conditions of a slurry flow rate of 1 kg/min and a mill peripheral speed of 8 m/s. After the dispersion treatment, the zirconia beads have been removed by filtration to produce the slurry of Example 8.

Using this slurry, production of a coating liquid for electrode formation, production of a positive electrode, production of a negative electrode, and production of a battery have been performed in the same manner as in Example 1, and each evaluation has been performed.

### <Comparative Example 5>

### (Production of Slurry)

To 85.6 mass% of NMP have been added 0.9 mass% of polyvinyl alcohol (Poval DR-1137 manufactured by Denka Company Ltd., saponification degree: 87%) as a dispersant and 13.5 mass% of carbon black (Li-435, manufactured by Denka Company Ltd.), and the mixture has been stirred at 70 rpm for 3 hours by a planetary mixer (HIVISMIX 3D-5, manufactured by Primix Co.) to prepare a slurry containing carbon black. The obtained slurry has been subjected to a dispersion treatment for 8 minutes in a bead mill (Mugenflow MGF2-ZA, manufactured by Ashizawa Finetech Co., Ltd.) equipped with zirconia beads (diameter: 0.5 mm) under conditions of a slurry flow rate of 1 kg/min and a mill peripheral speed of 8 m/s. After the dispersion treatment, the zirconia beads have been removed by filtration to produce the slurry of Comparative Example 5.

Using this slurry, production of a coating liquid for electrode formation, production of a positive electrode, production of a negative electrode, and production of a battery have been performed in the same manner as in Example 1, and each evaluation has been performed.

### <Comparative Example 6>

### (Production of Slurry)

To 85.6 mass% of NMP have been added 0.9 mass% of polyvinyl alcohol (Poval DR-1137 manufactured by Denka Company Ltd., saponification degree: 87%) as a dispersant and 13.5 mass% of carbon black (Li-435, manufactured by Denka Company Ltd.), and the mixture has been stirred at 70 rpm for 3 hours using a planetary mixer (HIVISMIX 3D-5, manufactured by Primix Co.) to prepare a slurry containing carbon black. The obtained slurry has been subjected to a dispersion treatment for 154 minutes in a bead mill (Mugenflow MGF2-ZA, manufactured by Ashizawa Finetech Co., Ltd.) equipped with zirconia beads (diameter: 0.5 mm) under conditions of a slurry flow rate of 1 kg/min and a mill peripheral speed of 8 m/s. After the dispersion treatment, the zirconia beads have been removed by filtration to produce the slurry of Comparative Example 6.

Using this slurry, production of a coating liquid for electrode formation, production of a positive electrode, production of a negative electrode, and production of a battery have been performed in the same manner as in Example 1, and each evaluation has been performed.

The evaluation results of Examples 6 to 8 and Comparative Examples 5 and 6 are shown in Table 3.

**[Table 3]**

| | | Example 6 | Example 7 | Example 8 | Comp. Example 5 | Comp. Example 6 |
|---|---|---|---|---|---|---|
| CB | Type | Li-435 | Li-435 | Li-435 | Li-435 | Li-435 |
| | Average primary particle size (nm) | 26 | 26 | 26 | 26 | 26 |
| | Crystallite size (Å) | 25 | 25 | 25 | 25 | 25 |
| | BET specific surface area (m²/g) | 133 | 133 | 133 | 133 | 133 |
| | Ratio (S₂/S₁) | 0.23 | 0.23 | 0.23 | 0.23 | 0.23 |
| Particle size distribution | D10 (µm) | 0.321 | 0.283 | 0.275 | 0.394 | 0.195 |
| | D50 (µm) | 0.648 | 0.636 | 0.754 | 1.265 | 0.325 |
| | D90 (µm) | 2.221 | 2.494 | 2.119 | 7.423 | 0.953 |
| | D50/(D90 - D10) | 0.34 | 0.29 | 0.41 | 0.18 | 0.43 |
| Battery evaluation | Rate capacity retention (%) | 81.5 | 82.1 | 81.8 | 75.1 | 77.5 |
| | Cycle capacity retention (%) | 75.3 | 77.1 | 76.3 | 68.4 | 69.8 |
| | Peeling strength (N/m) | 95 | 95 | 93 | 97 | 75 |

### <Comparative Example 7>

### (Production of Slurry)

To 89.7 mass% of NMP have been added 1.3 mass% of polyvinyl alcohol (Poval DR-1137 manufactured by Denka Company Ltd., saponification degree: 87%) as a dispersant and 9.0 mass% of carbon black (BLACK PEARLS 1000, manufactured by Cabot Co., average primary particle size: 16 nm, crystallite size (Lc): 14Å, BET specific surface area: 343 m²/g, ratio (S₂/S₁): 3.42), and the mixture has been stirred at 70 rpm for 3 hours using a planetary mixer (HIVISMIX 3D-5, manufactured by Primix Co.) to prepare a slurry containing carbon black. The obtained slurry has been subjected to a dispersion treatment for 45 minutes in a bead mill (Mugenflow MGF2-ZA, manufactured by Ashizawa Finetech Co., Ltd.) equipped with zirconia beads (diameter: 0.5 mm) under conditions of a slurry flow rate of 1 kg/min and a mill peripheral speed of 8 m/s. After the dispersion treatment, the zirconia beads have been removed by filtration to produce the slurry of Comparative Example 7.

Using this slurry, production of a coating liquid for electrode formation, production of a positive electrode, production of a negative electrode, and production of a battery have been performed in the same manner as in Example 1, and each evaluation has been performed.

### <Comparative Example 8>

### (Production of Slurry)

To 87.6 mass% of NMP have been added 1.7 mass% of polyvinyl alcohol (Poval DR-1137 manufactured by Denka Company Ltd., saponification degree: 87%) as a dispersant and 10.7 mass% of carbon black (ECP, manufactured by Lion Co., average primary particle size: 40 nm, crystallite size (Lc): 16Å, BET specific surface area: 820 m²/g, ratio (S₂/S₁): 2.06), and the mixture has been stirred at 70 rpm for 3 hours using a planetary mixer (HIVISMIX 3D-5, manufactured by Primix Co.) to prepare a slurry containing carbon black. The obtained slurry has been subjected to a dispersion treatment for 55 minutes in a bead mill (Mugenflow MGF2-ZA, manufactured by Ashizawa Finetech Co., Ltd.) equipped with zirconia beads (diameter: 0.5 mm) under conditions of a slurry flow rate of 1 kg/min and a mill peripheral speed of 8 m/s. After the dispersion treatment, the zirconia beads have been removed by filtration to produce the slurry of Comparative Example 8.

Using this slurry, production of a coating liquid for electrode formation, production of a positive electrode, production of a negative electrode, and production of a battery have been performed in the same manner as in Example 1, and each evaluation has been performed.

### <Comparative Example 9>

### (Production of Slurry)

To 80.7 mass% of NMP have been added 1.3 mass% of polyvinyl alcohol (Poval DR-1137 manufactured by Denka Company Ltd., saponification degree: 87%) as a dispersant and 18.0 mass% of carbon black (SuperPLi manufactured by Imerys Graphite & Carbon, average primary particle size: 36 nm, crystallite size (Lc): 20Å, BET specific surface area: 62 m²/g, ratio (S₂/S₁): 1.12), and the mixture has been stirred at 70 rpm for 3 hours using a planetary mixer (HIVISMIX 3D-5, manufactured by Primix Co.) to prepare a slurry containing carbon black. The obtained slurry has been subjected to a dispersion treatment for 20 minutes in a bead mill (Mugenflow MGF2-ZA, manufactured by Ashizawa Finetech Co., Ltd.) equipped with zirconia beads (diameter: 0.5 mm) under conditions of a slurry flow rate of 1 kg/min and a mill peripheral speed of 8 m/s. After the dispersion treatment, the zirconia beads have been removed by filtration to produce the slurry of Comparative Example 9.

Using this slurry, production of a coating liquid for electrode formation, production of a positive electrode, production of a negative electrode, and production of a battery have been performed in the same manner as in Example 1, and each evaluation has been performed.

### <Comparative Example 10>

### (Production of Slurry)

To 83.5 mass% of NMP have been added 1.5 mass% of polyvinyl alcohol (Poval DR-1137 manufactured by Denka Company Ltd., saponification degree: 87%) as a dispersant and 15.0 mass% of carbon black (YS, manufactured by Orion Co., average primary particle size: 26 nm, crystallite size (Lc): 27Å, BET specific surface area: 120 m²/g, ratio (S₂/S₁): 0.92), and the mixture has been stirred at 70 rpm for 3 hours using a planetary mixer (HIVISMIX 3D-5, manufactured by Primix Co.) to prepare a slurry containing carbon black. The obtained slurry has been subjected to a dispersion treatment for 35 minutes in a bead mill (Mugenflow MGF2-ZA, manufactured by Ashizawa Finetech Co., Ltd.) equipped with zirconia beads (diameter: 0.5 mm) under conditions of a slurry flow rate of 1 kg/min and a mill peripheral speed of 8 m/s. After the dispersion treatment, the zirconia beads have been removed by filtration to produce the slurry of Comparative Example 10.

Using this slurry, production of a coating liquid for electrode formation, production of a positive electrode, production of a negative electrode, and production of a battery have been performed in the same manner as in Example 1, and each evaluation has been performed.

The evaluation results of Comparative Example 7 to 10 are shown in Table 4.

**[Table 4]**

| | | Comp. Example 7 | Comp. Example 8 | Comp. Example 9 | Comp. Example 10 |
|---|---|---|---|---|---|
| CB | Type | BP1000 | ECP | Super PLi | YS |
| | Average primary particle size (nm) | 16 | 40 | 36 | 26 |
| | Crystallite size (Å) | 14 | 16 | 20 | 27 |
| | BET specific surface area (m²/g) | 343 | 820 | 62 | 120 |
| | Ratio (S₂/S₁) | 3.42 | 2.06 | 1.12 | 0.92 |
| Particle size distribution | D10 (µm) | 0.355 | 0.321 | 0.310 | 0.275 |
| | D50 (µm) | 0.655 | 0.621 | 0.667 | 0.604 |
| | D90 (µm) | 1.854 | 2.021 | 1.951 | 1.857 |
| | D50/(D90 - D10) | 0.44 | 0.37 | 0.41 | 0.38 |
| Battery evaluation | Rate capacity retention (%) | 69.4 | 80.6 | 60.4 | 79.6 |
| | Cycle capacity retention (%) | 61.0 | 69.8 | 59.8 | 71.2 |
| | Peeling strength (N/m) | 85 | 83 | 88 | 82 |

## Claims

1. A slurry containing carbon black in a liquid medium, wherein
an average primary particle size of the carbon black is 17 nm or more and 30 nm or less,
a crystallite size (Lc) of the carbon black is 15Å or more and 26Å or less, and
in a volume-based particle size distribution of a particle group including secondary particles of the carbon black and tertiary particles obtained by aggregation of the secondary particles of the carbon black in the slurry measured by a laser diffraction/scattering method, D50 (µm) is 0.5 µm or more and 0.9 µm or less, and a ratio of D50 (µm) to a difference between D10 (µm) and D90 (µm) (D50/(D90 - D10)) is 0.25 or more and 0.5 or less.

2. A coating liquid for electrode formation, which is a mixture of the slurry according to claim 1, a binding material solution containing a binding material in a liquid medium, and an active material.

3. A method for producing electrodes including a current collector and a mixture layer, the method comprising:
mixing the slurry according to claim 1, a binding material solution containing a binding material in a liquid medium, and an active material to obtain the coating liquid for electrode formation according to claim 2;
applying the coating liquid for electrode formation onto a current collector; and
removing at least a part of the liquid medium to form a mixture layer on the current collector, and forming an electrode including the current collector and the mixture layer.

4. A method for producing batteries, comprising: the method for producing electrodes according to claim 3.
